# EUROPEAN PATENT APPLICATION

(11) **EP 1 111 760 A2**
(43) Date of publication of application: **27.06.2001**
(21) Application number: 00128051.0
(22) Date of filing: 21.12.2000
(51) Int. Cl.: H02K 15/04

(54) **Apparatus and methods for winding dynamo-electric machine stators with parallel wires**

(30) Priority: 23.12.1999 US 172039 P; 20.12.2000 US 741750
(71) Applicant: PAVESI S.R.L., 10090 Cascine Vica - Rivoli (Torino) (IT)
(72) Inventor: Stratico, Gianfranco, 53100 Siena (IT); Bonaccorsi, Andrea, 57100 Livorno (IT)
(74) Representative: Notaro, Giancarlo

(57) **Abstract**

Multiple wire stator coils are formed by winding multiple wires simultaneously in a non-complicated manner without individual wires of the multiple wire coils twisting, overlapping, or entangling each other during the winding process.

## Description

### Background of the Invention

This invention relates to the winding of coils for dynamo-electric machine stators. More particularly, this invention relates to the winding of coils with more than one wire simultaneously for dynamo-electric machine stators.

Winding stator coils with more than one wire simultaneously is often referred to as "winding with parallel wires." The resulting coil is usually referred to as a "multiple wire coil." A group of interconnected multiple wire coils forms a coil formation. Each coil formation has an initial lead and a final lead that are each formed with the end portions of the multiple wires used to wind the coils. Multiple wire coils of a coil formation are each successively wound. Successively wound multiple wire coils are physically adjacent to each other. After each multiple wire coil is wound, it is transferred to an inserting tool. Once all the coils of a coil formation are transferred to the inserting tool, the coil formation is inserted into an angular section of stator core slots, which are present around the 360° circumference of the stator core. Insertion of other coil formations into remaining angular sections of slots completes the stator core wiring. Such stators are used in, for example, induction motors.

A difficulty in forming multiple wire coils is preventing the individual wires from twisting or crossing over each other during the winding process. Twisting or overlapping wires increase the thickness of the wound coil making insertion of the coil into stator core slots significantly more difficult, if not impossible.

Apparatus for forming multiple wire coils are known. Typically, a wire dispensing device (e.g., a flyer) pulls and dispenses multiple wires from respective wire rolls as the device rotates around a wiring template. A disadvantage of known apparatus is that very elaborate or complicated procedures or techniques are employed to prevent the parallel wires from twisting, overlapping, or entangling each other while being wound around the template. Other disadvantages include the use of very complicated wiring templates that are designed to prevent wire overlap or entanglement. These disadvantages increase production time and costs, as well as the cost and maintenance of the apparatus.

In view of the foregoing, it would be desirable to provide apparatus that forms multiple wire coils in a non-complicated manner such that the parallel wires of the coils are not twisted, overlapped, or entangled with each other.

It would also be desirable to provide apparatus that successively forms interconnected multiple wire coils in a non-complicated manner such that the parallel wires of the interconnected coils are not twisted, overlapped, or entangled with each other.

### Summary of the Invention

It is an object of this invention to provide apparatus that forms multiple wire coils in a non-complicated manner such that the parallel wires of the coils are not twisted, overlapped, or entangled with each other.

It is also an object of this invention to provide apparatus that successively forms interconnected multiple wire coils in a non-complicated manner such that the parallel wires of the interconnected coils are not twisted, overlapped, or entangled with each other.

In accordance with this invention, apparatus is provided that includes multiple wiring nozzles that each dispense wire substantially simultaneously and are each in a fixed position relative to each other. The wiring nozzles are moveable around a preferably stationary wiring template as follows: in a first . direction around a side of the wiring template; in a second direction around a second side of the wiring template, the second direction being substantially perpendicular to the first direction; in a third direction around a third side of the wiring template, the third direction being substantially perpendicular to the second direction and substantially opposite and substantially parallel to the first direction; and in a fourth direction around a fourth side of the wiring template, the fourth direction being substantially perpendicular to the third direction and substantially opposite and substantially parallel to the second direction. The wiring nozzles start and end their movements at the same position. A movement in all four directions forms a single turn of a coil. Such movements are repeated to form a specified number of coil turns.

The wiring nozzles move as described above preferably in either a clockwise or counterclockwise direction. Moreover, the wiring nozzles can preferably wind a first coil in a clockwise (or counterclockwise) direction, and then continuously wind a second coil, without cutting the wires from the first coil, in a counterclockwise (or clockwise) direction.

Furthermore, the wiring nozzles are preferably aligned in a single plane. While moving as described above, the wiring nozzles are preferably in alignment with planes that are substantially parallel to each other.

Advantageously, the parallel wires of the wound multiple wire coils do not become twisted, overlapped, or entangled during the winding process of the present invention.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a simplified diagrammatic plan view of a stator core superimposed over a coil formation;
FIG. 2 is a simplified diagrammatic elevational view of a preferred embodiment of apparatus according to the present invention;
FIG. 2A is a simplified diagrammatic elevational view of a portion of the apparatus of FIG. 2;
FIG. 3 is a simplified diagrammatic plan view of the apparatus of FIG. 2 at a first coil winding stage according to the present invention;
FIG. 4 is simplified diagrammatic elevational view of the apparatus of FIG. 2 at another operational stage according to the present invention; and
FIG. 5 is a simplified diagrammatic plan view of the apparatus of FIG. 2 at another coil winding stage according to the present invention.

### Detailed Description of the Invention

The present invention provides apparatus and methods for winding multiple wire coils for dynamo-electric machine stators. Advantageously, multiple wire coils can be wound without individual wires of the coils becoming twisted or entangled with each other. Furthermore, the present invention provides apparatus and methods for forming coil formations (i.e., groups of interconnected multiple wire coils) without coil wires becoming twisted or entangled, and for inserting those formations into a group of slots limited to a particular angular section of a stator core. These apparatus and methods advantageously do not involve complex procedures, techniques, or wiring templates.

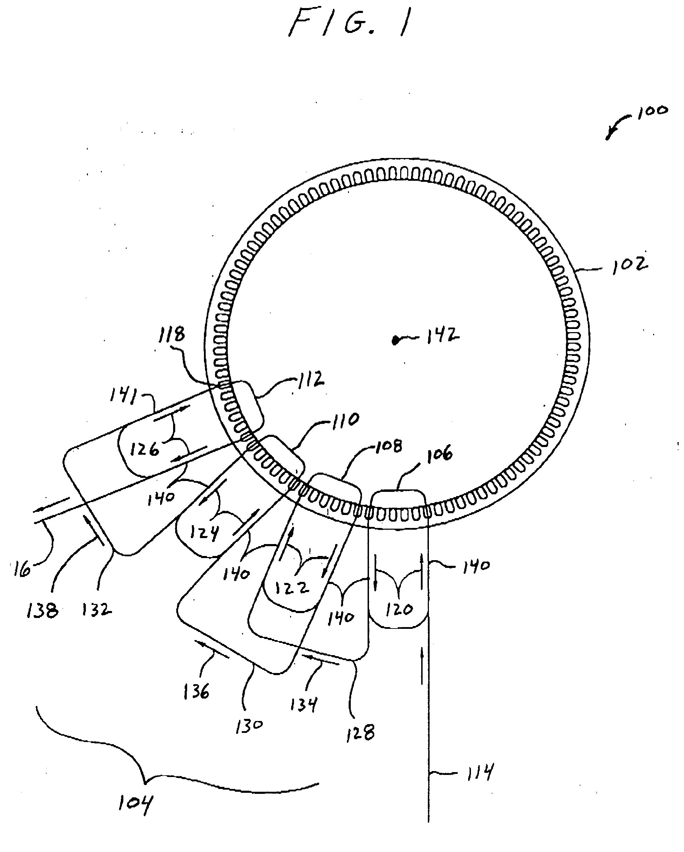

FIG. 1 shows a stator core 102 superimposed over a coil formation 104. Coil formation 104 includes coils 106, 108, 110, and 112, and is shown as it would be loaded onto a coil inserting tool (not shown). Coils 106, 108, 110, and 112 are successively formed (e.g., coil 106 is formed first, coil 108 second, etc.). Coil formation 104 also includes initial lead 114 and final lead 116. From a coil inserting tool, coil formation 104 is inserted (upward relative to FIG. 1) into slots 118 of stator core 102.

Each coil has a respective wire routing direction shown by arrows 120, 122, 124, and 126 which are either clockwise or counterclockwise. The routing directions become opposite when passing between adjacent coils. Coils 106, 108, 110, and 112 are interconnected via interconnection portions 128, 130, and 132 as shown. The routing directions for interconnection portions 128, 130, and 132 are shown by arrows 134, 136, and 138, respectively.

FIG. 1 also shows radial arms 140-141 of the coils, aligned with respective core slots 118 of stator core 102 into which they will be inserted. Note that projections of the radial arms generally converge at center 142 of stator core 102. As shown in FIG. 1, slots 118 occupied by radial arms 140-141 of the coils are a subset of the total number of slots 118 present in stator core 102, and that subset is limited to an angular section of the total slots relative to the 360° circumference of the stator. The boundaries of the angular section are determined by the slots containing initial lead 114 and radial arm 141. Even within such a section, there may be slots 118 which will not be occupied by coils of coil formation 104. similarly, the coils of other formations will occupy the slots which are outside the section delimited by initial lead 114 and radial arm 141. Note that for clarity, the coils of FIG. 1 are represented as single lines and as having only one turn. In reality, the turns are typically numerous and include a multiple number of wires.

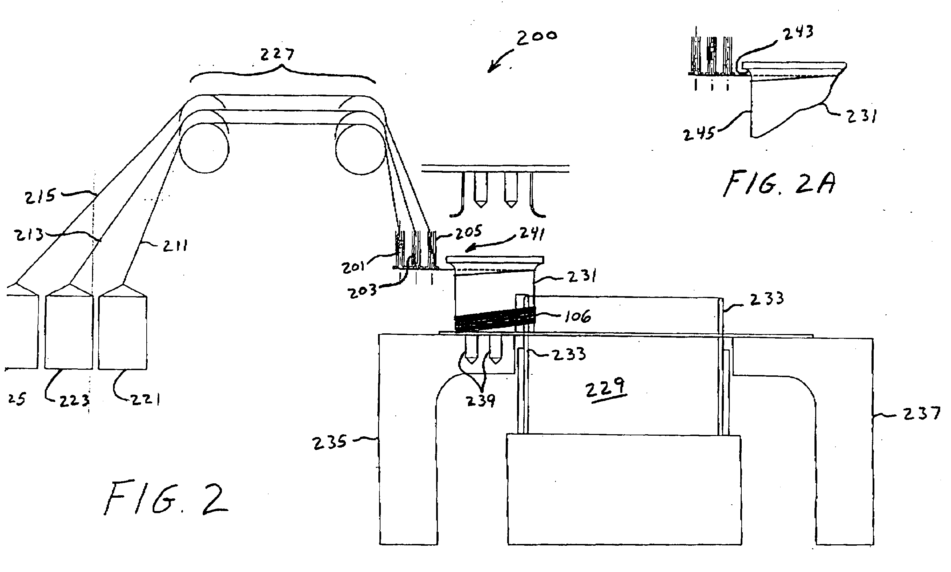

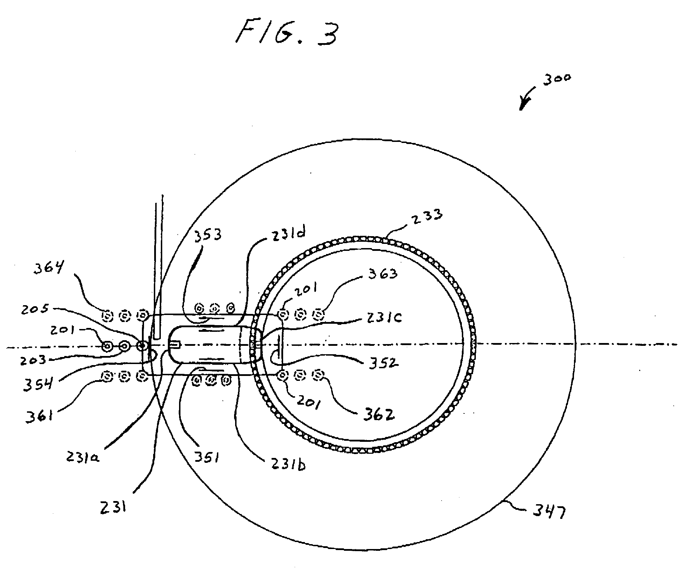

FIG. 2 shows a preferred embodiment of apparatus that forms coils such as coils 106, 108, 110, and 112 in accordance with the present invention. Apparatus 200 advantageously forms such coils without the individual wires of the coils twisting, overlapping, or entangling with each other.

To form coil 106, for example, wiring nozzles 201, 203, and 205 dispense respective wires 211, 213, and 215 substantially simultaneously. These wires are supplied to the wiring nozzles preferably from respective supply drums 221, 223, and 225. The supply drums are preferably aligned within a single plane preferably parallel to a plane containing FIG. 2. Wires 211, 213, and 215 are guided to their respective nozzles by running on pulley wheels 227. A respective pair of pulley wheels 227 is preferably provided for each wire and is preferably contained in a respective and exclusive plane, which is also preferably parallel to the plane containing FIG. 2. Apparatus 200 places wound coils on an inserting tool 229.

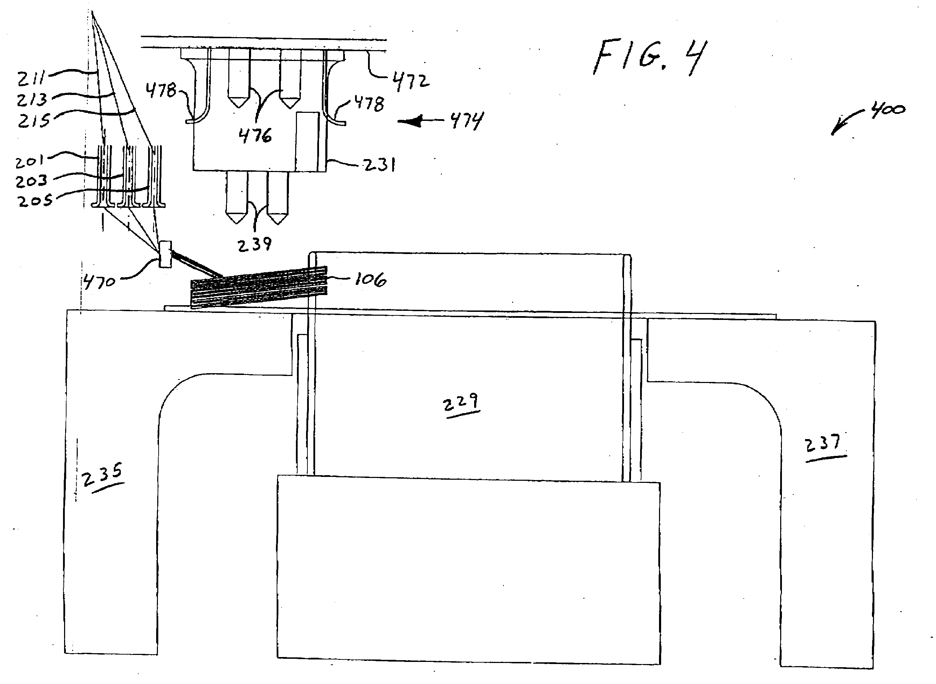

FIG. 3 shows wiring template 231 (which is preferably generally rectangular) as apparatus 200 winds the first turn of coil 106. The wiring nozzles are positioned adjacent to and in fixed position relative to each other, and extend along a line which is substantially parallel to planes containing sides 231b and 231d of wiring template 231.

To form coils 106, 108, 110, and 112, wiring template 231 is preferably aligned with wiring nozzles 201, 203, and 205, and positioned such that the forward position of sides 231b and 231d are in alignment with the spacings between blades 233 of the inserting tool, as shown in FIGS. 2 and 3. Such spacings will receive arms 140 of, for example, coil 106, which is currently being wound on wiring template 231. Moreover, such spacings will maintain the arms of coil 106 in the required positions for the successive operation of inserting them into slots of the stator core. During the insertion operation, the blades will also guide the arms of the coil into the stator slots. Such insertion operations can be similar to or the same as insertion operations known in the art.

Returning to FIG. 2, support arm 235 supports and references wiring template 231 in a winding position. Support arm 235 is shown transparent to show that guide pins 239 are received in internal bores of the support arm to reference and preferably hold in place the winding template. Again, for purposes of clarity, the transparency of wiring template 231 shows how blades 233 of the inserting tool are received within wiring template 231 to align sides 231b and 231d with the spacings between the blades of the inserting tool. These spacings will receive arms 140 of coil 106 after the coil is wound.

Ends 231a and 231c of wiring template 231 lie in planes substantially perpendicular to sides 231b and 231d. A coil such as coil 106, 108, 110, or 112 is formed by extending under tension wires 211, 213, and 215 around the sides and ends of wiring template 231. One complete path of these wires around the winding template forms a turn of the coil consisting of three wires. These wires are extended by moving wiring nozzles 201, 203, and 205 around the wiring template. By moving these nozzles in this manner, wires 211, 213, and 215 are pulled from their respective supply drums and wrapped around the wiring template. Tensioners (not shown and known in the art) may be used to apply tension on each wire, thus assuring that the wires stay wrapped around wiring template 231.

More particularly, to form a turn of a coil, the wiring nozzles move together with translation motion 351, starting from position 361. Motion 351 is parallel to side 231b and causes the wires to extend onto side 231b. At the end of this motion, the nozzles are in position 362. From position 362, the nozzles move together with transverse motion 352 (substantially parallel to end 231c). This extends the wires onto end 231c. At the end of transverse motion 352, the nozzles are in position 363. From position 363, the wiring nozzles move together with opposite translation motion 353 (substantially parallel to side 231d), extending the wires onto side 231d. At the end of opposite translation motion 353, the nozzles are in position 364. From position 364, the nozzles move together with opposite transverse motion 354 (substantially parallel to end 231a), extending the wires onto end 231b. At the end of opposite transverse motion 354, the nozzles are back in position 361. These motions form a complete turn of a coil consisting of multiple wires 211, 213, and 215, and can be repeated to form a specified number of turns in the coil.

These motions can be summarized as follows:
two longitudinal motions 351 and 353, each opposite the other, and two transverse motions 352 and 354, each also opposite the other and interposed between
motions 351 and 353. Note that as wiring nozzles 201, 203, and 205 translate through motions 351-354, they remain aligned in planes that are substantially parallel to each other. This combination and manner of movements advantageously prevent wires 211, 213,
and 215 from twisting on each other.

The movements of wiring nozzles 201, 203, and 205 can be performed by mounting the nozzles on a common support structure that drives needles to wind a stator such as that, for example, disclosed in U.S. Patent No. 5,413,289 (hereinafter "the '289 patent"), which is hereby incorporated by reference herein in its entirety. The rotary motions of the needles shown in the '289 patent can be substituted with a translation motion such as that required for motions 352 and 354. Thus, the common support structure for the nozzles can include preferably two independent translating platforms -- one for motions 351 and 353, and the other for motions 352 and 354. The motion of each translating platform is powered preferably by a separate motor. The separate motors are preferably driven by a common control unit (see, e.g., FIGS. 20 and 21 of the '289 patent). The rotary motion disclosed in the '289 patent is an alternative for obtaining transverse motions such as motions 352 and 354. Alternatively, any suitable structure or mechanism that produces motions 351-354 can be used with apparatus 200.

FIG. 2A is an enlargement of portion 241 of template 231. The wires are drawn by nozzles 201, 203, and 205 during motions 351-354 at the level of portion 241. The curved configuration of portion 243 leading to narrower portion 245 preferably causes just wound turns to move towards portion 245. The turns move along portion 245 as winding of a coil progresses. Turns being wound on portion 243 push previously wound turns from portion 243 to narrower portion 245. Similarly, turns on portion 245 push previously wound turns into the spacings of an inserting tool, which receive the arms of the coil.

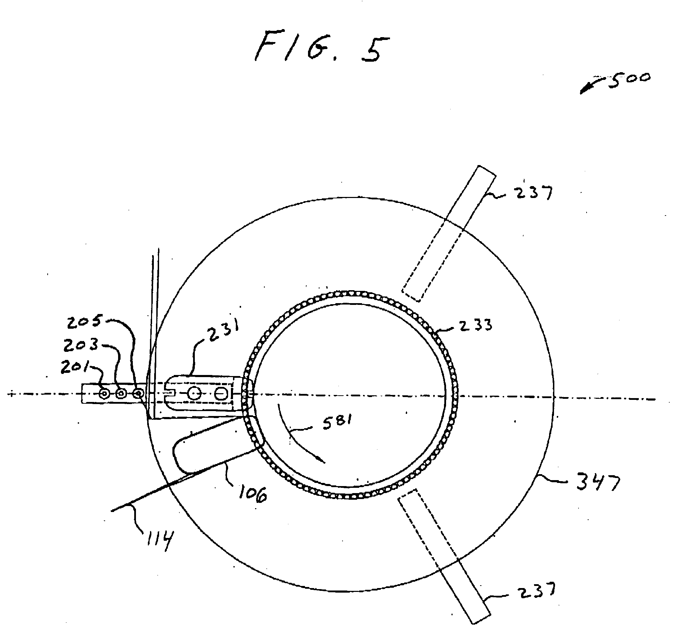

FIG. 4 is similar to FIG. 2 except that apparatus 200 is at an intermediate stage after having wound coil 106 but before starting to wind coil 108. Lead pull 470 holds interconnection portion 128. Wiring template 231 is held by hold-and-strip device 472 in position 474. More particularly, this stage of apparatus 200 occurs after wiring template 231 has been retrieved from the position shown in FIG. 2 and moved to position 474 by hold-and-strip device 472.

Hold-and-strip device 472 includes clamp pins 476 and stripper members 478. Clamp pins 476 are inserted in respective bores of the interior of wiring template 231 and expand to hold wiring template 231. Stripper members 478 are partially received in respective passageways of wiring template 231 and strip wire turns from wiring template 231. Note that wiring template 231 is shown transparent in FIG. 4 to show that members 478 and clamp pins 476 are located in the interior of wiring template 231.

Once a coil has been completely wound, some of the last turns may still be present on wiring template 231. When this occurs, device 472 descends to retrieve wiring template 231 and move it to position 474. During the descent, stripper members 478 push any turns that are still present on wiring template 231 into the spacings of the inserting tool.

FIG. 5 is similar to FIG. 3 except that nozzles 201, 203, and 205 and wiring template 231 are positioned for winding of a successive coil such as coil 108. Between coil windings and while the wiring template is held in position 474, the inserting tool can be indexed around its center (see, e.g., rotation direction 581 of FIG. 5) to position spacings of the inserting tool for receipt of the radial arms of the next wound coil.

Lead pull 470 preferably holds the interconnection portions during certain stages of winding and also during intermediate stages between coil winding. This prevents the turns from unwrapping while they are on either the wiring template or the inserting tool. Lead pull 470 preferably also can anchor the interconnection portions and the initial and final leads to temporary anchoring grippers placed on plate 347. The coils rest on plate 347 after they have descended into the spacings of the inserting tool. The routing of the interconnection portions and the initial and final leads is achieved by manipulation of lead pull 470, which is known in the art. (Indexing of the inserting tool also contributes to such routing.) Lead pull 470 optionally can include a wire cutter to free a coil formation from apparatus 200 upon the coil formation's completion.

As described above, a coil that has descended into the spacings of an inserting tool rests on plate 347, which is supported by support arms 235 and 237. Once the inserting tool has received all the coils of a formation, plate 347 can descend by lowering support arms 235 and 237. This permits plate 347 to reach the base of the inserting tool such that the blades are clear for insertion of the coils into the stator core.

Thus it is seen that apparatus and methods are provided that wind coils with parallel wires simultaneously without the individual wires of the coils twisting, overlapping, or entangling with each other. One skilled in the art will appreciate that the present invention can be practiced by other than the described embodiments, which are presented for purposes of illustration and not of limitation, and the present invention is limited only by the claims which follow.

## Claims

1. Apparatus that winds multiple wire stator coils by winding multiple wires simultaneously, said apparatus comprising a plurality of wiring nozzles that dispense multiple wires substantially simultaneously and that are movable around a wiring template as follows:
in a first direction around a side of said wiring template;
in a second direction around a second side of said wiring template, said second direction substantially perpendicular to said first direction;
in a third direction around a third side of said wiring template, said third direction substantially perpendicular to said second direction and substantially opposite and substantially parallel to said first direction; and
in a fourth direction around a fourth side of said wiring template, said fourth direction substantially perpendicular to said third direction and substantially opposite and substantially parallel to said second direction.

2. The apparatus of claim 1 wherein said wiring nozzles are aligned in a single plane.

3. The apparatus of claim 2 wherein, while moving in said first, second, third, and fourth directions, said wiring nozzles are in alignment with planes substantially parallel to said single plane.

4. The apparatus of claim 1 wherein each said wiring nozzle is in a fixed position relative to other said wiring nozzles while moving in said first, second, third, and fourth directions.

5. The apparatus of claim 1 wherein said wiring nozzles are movable clockwise and counterclockwise around said wiring template.

6. The apparatus of claim 1 further comprising a support structure on which said wiring nozzles are mounted, said support structure movable to move said wiring nozzles around a wiring template in said first, second, third, and fourth directions.

7. The apparatus of claim 6 wherein said support structure is movable to move said wiring nozzles clockwise and counterclockwise around said wiring template.

8. The apparatus of claim 6 wherein said support structure comprises first and second translating platforms, said first platform translating in said first and third directions, and said second platform translating in said second and fourth directions.

9. The apparatus of claim 1 further comprising a plurality of pulleys for guiding a respective plurality of wires respectively to said wiring nozzles.

10. The apparatus of claim 1 further comprising a support arm that references and holds in place said wiring template.

11. The apparatus of claim 1 further comprising a hold-and-strip device that holds said wiring template, moves said wiring template from a first position to a second position, and strips wound coils from said wiring template onto a coil inserting tool.

12. A method of forming a multiple wire stator coil, said method comprising;
winding a plurality of wires substantially simultaneously in a first direction on a side of a wiring template;
winding said plurality of wires substantially simultaneously in a second direction on a second side of said wiring template, said second direction substantially perpendicular to said first direction;
winding said plurality of wires substantially simultaneously in a third direction on a third side of said wiring template, said third direction substantially perpendicular to said second direction and substantially opposite and substantially parallel to said first direction; and
winding said plurality of wires substantially simultaneously in a fourth direction on a fourth side of said wiring template, said fourth direction substantially perpendicular to said third direction and substantially opposite and substantially parallel to said second direction.

13. The method of claim 12 wherein said winding in said first direction begins at a start position and said winding in said fourth direction ends at said start position.

14. The method of claim 12 wherein said winding in said first, second, third, and fourth directions occurs clockwise.

15. The method of claim 12 wherein said winding in said first, second, third, and fourth directions occurs counterclockwise.

16. The method of claim 12 wherein first and second said multiple wire coils are formed successively, said method comprising;
winding said plurality of wires substantially simultaneously in said first, second, third, and fourth directions in a clockwise motion to form said first multiple wire coil; and
winding said plurality of wires substantially simultaneously, without cutting said wires from said first multiple wire coil, in said first, second, third, and fourth directions in a counterclockwise motion to form said second multiple wire coil.

17. The method of claim 12 wherein first and second said multiple wire coils are formed successively, said method comprising:
winding said plurality of wires substantially simultaneously in said first, second, third, and fourth directions in a counterclockwise motion to form said first multiple wire coil; and
winding said plurality of wires substantially simultaneously, without cutting said wires from said first multiple wire coil, in said first, second, third, and fourth directions in a clockwise motion to form said second multiple wire coil.

18. The method of claim 12 wherein a plurality of said multiple wire coils are formed successively, said method comprising:
winding said plurality of wires substantially simultaneously in said first, second, third, and fourth directions to form said first multiple wire coil;
stripping said first multiple wire coil from said wiring template onto an inserting tool;
winding said plurality of wires substantially simultaneously, without cutting said wires from said first multiple wire coil, in said first, second, third, and fourth directions to form said second multiple wire coil; and
stripping said second multiple wire coil from said wiring template onto said inserting tool.

19. The method of claim 12 wherein a plurality of said multiple wire coils are formed successively to form a coil formation, said method comprising:
winding said plurality of wires substantially simultaneously in said first, second, third, and fourth directions to successively form each said multiple wire coil of said formation;
stripping each said multiple wire coil from said wiring template onto an inserting tool upon formation of each said multiple wire coil;
supporting said multiple wire coils on said inserting tool at a first level of said inserting tool until all said multiple wire coils of said coil formation have been formed and stripped onto said inserting tool; and
forcing all said multiple wire coils of said coil formation from said first level of said inserting tool to a second level of said inserting tool.
